# EUROPEAN PATENT APPLICATION

(11) **EP 3 782 479 A1**
(43) Date of publication of application: **24.02.2021**
(21) Application number: 19844717.9
(22) Date of filing: 31.07.2019
(51) Int. Cl.: A23L 27/60

(54) **CHEESE-CONTAINING ACIDIC EMULSIFIED LIQUID SEASONING**

(30) Priority: 01.08.2018 JP 2018145383
(71) Applicant: Kewpie Corporation, Tokyo 150-0002 (JP)
(72) Inventor: MATSUDA Hajime, Chofu-shi, Tokyo 182-0002 (JP); TAKAHASHI Hiromitsu, Chofu-shi, Tokyo 182-0002 (JP); IDEMOTO Sachiko, Chofu-shi, Tokyo 182-0002 (JP)
(74) Representative: Winter, Brandl, Fürniss, Hübner, Röss, Kaiser, Polte - Partnerschaft mbB
(86) International application number: PCT/JP2019/029928
(87) International publication number: WO 2020/027169

(57) **Abstract**

[Problem to be Solved]

To provide a cheese-containing acidic emulsified liquid seasoning which can provide both a large grainy texture of cheese and a smooth palatability.

[Means to Solve the Problem]

The present invention concerns an acidic emulsified liquid seasoning comprising cheese, and edible fats and oils, wherein
the content of the cheese is 1 mass% to 20 mass% with respect to the total amount of the acidic emulsified liquid seasoning;
the content of the edible fats and oils is 30 mass% to 70 mass% or less with respect to the total amount of the acidic emulsified liquid seasoning;
the viscosity of the acidic emulsified liquid seasoning at 25 °C is 1.5 Pa • s to 15.0 Pa • s;
and wherein a frequency of mode diameter in the range of greater than 104.7 µm and 2000 µm or less of the cheese in the acidic emulsified liquid seasoning is 1.00% to 4.30% in a volume-based particle size distribution measured using a laser diffraction type particle size distribution analyzer under the analysis conditions of: non-spherical and refractive index of 1.6; particle size measurement range of 0.023 µm to 2000 µm; and particle size classification of 132 ch.

## Description

### Field of the Invention

The present invention relates to a cheese-containing acidic emulsified liquid seasoning, and more particularly, to a cheese-containing acidic emulsified liquid seasoning in which a smooth palatability is felt while feeling large grains of cheese.

### Background Art

Heretofore, acidic liquid seasonings such as mayonnaise, mayonnaise kinds, and dressings have been on the market, and various ingredients have been blended into these acidic liquid seasonings. Among various ingredients, cheese goes well with sourness, the richness of oil, and also a good match for salads, thus dressings containing cheese have been developed in recent years. For example, there are a separated liquid type dressing in which cheese is added to the aqueous phase, and an emulsified type dressing in which an oil phase is dispersed in the aqueous phase.

As a separated liquid type, there is proposed for example, a separated liquid dressing containing granular cheese, which is prepared by mixing water-phase components containing the granular cheese at a high temperature (see Patent Document 1). However, in the method for producing a dressing described in Patent Document 1, for example, when the aqueous phase is mixed at a high temperature with strong stirring, or when it is applied to an emulsified type accompanied with strong stirring, the grainy texture of the mixed granular cheese still tends to disappear during the treatment, and thus it was difficult to obtain a dressing in which a satisfactory grainy texture of the cheese is left.

On the other hand, as an emulsified type, there is proposed for example, a paste acidic emulsified food which contains granular cheese that has been sufficiently pickled in vinegar and subsequently further heat-treated in the presence of vinegar and salt (see Patent Document 2). However, in this method, the cheese needs to be pickled in vinegar in advance, which has been complicated in the manufacturing process. In addition, as a characteristic of a preferable dressing, it has been required to feel a smoother palatability while feeling large grains of cheese.

### Prior art documents

### Patent Document

Patent Document 1: Japanese Patent Application Laid-Open No. 2005-151870
Patent Document 2: Japanese Patent Application Laid-Open No. 2008-035780

### SUMMARY OF THE INVENTION

### Problem to be Solved by the Invention

The object of the present invention is to provide a cheese-containing acidic emulsified liquid seasoning which has both a large grainy texture of cheese and a smooth palatability.

### [Means for Solving the Problem]

As a result of intensive studies in order to solve the above-mentioned problem, the present inventors have surprisingly found that in a cheese-containing acidic emulsified liquid seasoning, it is possible to achieve both large grains of cheese and smooth palatability by adjusting a mode diameter within a range of greater than 104.7 µm and 2000 µm or less in a volume-based particle size distribution of cheese to fall within a specific range and the frequency thereof. The present invention has been completed on the basis of such finding.

That is, according to one aspect of the present invention, there is provided an acidic emulsified liquid seasoning comprising cheese, and edible fats and oils, wherein
the content of the cheese is 1% or more by mass and 20 % or less by mass with respect to the total amount of the acidic emulsified liquid seasoning;
the content of the edible fats and oils is 30% or more by mass and 70% or less by mass with respect to the total amount of the acidic emulsified liquid seasoning;
the viscosity of the acidic emulsified liquid seasoning at 25 °C is 1.5 Pa · s or more and 15.0 Pa · s or less;
and wherein a frequency of mode diameter in the range of greater than 104.7 µm and 2000 µm or less of the cheese in the acidic emulsified liquid seasoning is 1.00% or more and 4.30% or less in a volume-based particle size distribution measured using a laser diffraction type particle size distribution analyzer under the analysis conditions of: non-spherical and refractive index of 1.6; particle size measurement range of 0.023 µm or more and 2000 µm or less; and particle size classification of 132 ch.

In an embodiment of the present invention, in the volume-based particle size distribution, the cumulative frequency of a particle diameter of 0.023 µm or more and 104.7 µm or less is preferably 10.00% or more and 55.00% or less.

In an embodiment of the present invention, in the volume-based particle size distribution, the mode diameter is 114.1 µm or more and 1535 µm or less and
the frequency of the mode diameter is preferably 2.00% or more and 4.00% or less.

In an embodiment of the present invention, the acidic emulsified liquid seasoning preferably has a hardness of 50g or more and 1000g or less, when using a texture analyzer having a cylindrical plunger (diameter: 20 mm), a load is applied by inserting the plunger for 30 mm at a descending speed of 10 mm / second into the acidic emulsified liquid seasoning at a temperature of 25 °C, and
subsequently, when the plunger is separated from the acidic emulsified liquid seasoning at a rising speed of 10 mm / second, the adhesion strength is preferably 10g or more to 200g or less.

In an embodiment of the present invention, the cheese preferably contains two or more kinds of raw material cheeses.

In an embodiment of the present invention, the raw material cheeses are preferably at least one or more of natural cheese and process cheese respectively.

In an embodiment of the present invention, the acidic emulsified liquid seasoning preferably further comprises a yeast extract in a paste form.

### Effect of the Invention

The acidic emulsified liquid seasoning of the present invention can make one feel a smooth palatability because of the unevenness of the grain shapes of the cheese while feeling the large grain feeling of the cheese. By improving the quality of these products, consumer appetite will increase, leading to expectation for further market expansion of the cheese-containing acidic emulsified liquid seasonings.

### Embodiment of the Invention

### < Acidic Emulsified Liquid Seasoning >

The acidic emulsified liquid seasoning of the present invention comprises at least cheese, and edible fats and oils, and may further comprise a yeast extract, a thickener, an acid material, egg yolk, other raw materials, and the like.

The acidic emulsified liquid seasoning of the present invention refers to a liquid seasoning (oil-in-water type (O/W type) liquid seasoning) in which the oil phase is dispersed in the aqueous phase in the form of oil droplets. Such liquid seasonings include dressings, sauces, tare (sauces), and other similar foods, with dressings being preferred. The water content of the acidic emulsified liquid seasoning is, without particular limitation, preferably 20% or more by mass, more preferably 25% or more by mass, still preferably 30% or more by mass, and preferably 60% or less by mass, more preferably 55% or less by mass, still preferably 50% or less by mass with respect to the total amount of the acidic emulsified liquid seasoning. The water content in the acidic emulsified liquid seasoning can be measured by a conventional method, for example, by a direct method of atmospheric pressure heating and drying method described in the 7^{th} revision of Analysis Manual of Japan Food Products Standard Ingredients Tables.

### (Volume-Based Particle Size Distribution)

The cheese in the acidic emulsified liquid seasoning of the present invention has, in the volume-based particle size distribution measured by using a laser diffraction type particle size distribution measuring device under the following analysis conditions: non-spherical and refractive index: 1.6, particle size measuring range: 0.023 µm or more and 2000 µm or less, particle size classification: 132 ch,
a mode diameter (the most frequent particle diameter) in the range of greater than 104.7 µm and 2000 µm or less which is preferably 114.1 µm to 1535 µm, more preferably 135.7 µm or more, still preferably 176.0 µm or more, and preferably 1291 µm or less, more preferably 1086 µm or less,
a frequency of the mode diameter which is 1.00% to 4.30%, preferably 1.50% or more, more preferably 2.00% or more, and preferably 4.15% or less, more preferably 4.00% or less.

Only one mode diameter may be present, or two or more mode diameters may be present in the range of greater than 104.7 µm and 2000 µm or less.

When the mode diameter of the granular cheese and the frequency thereof are within the above ranges, one can feel a smooth palatability because of the unevenness of the grain shape of the cheese while feeling the large grain feeling of the cheese. Examples of the method for adjusting the mode diameter of the granular cheese and the frequency thereof, the temperature and time are adjusted of the first heating treatment (water-phase heating treatment) and the second heating treatment (final heating treatment) and the emulsification conditions in the following manufacturing process of the acidic emulsified liquid seasoning.

The cumulative frequency of particle diameters of 0.023 µm or more and 104.7 µm or less is preferably 10.00% or more, more preferably 15.00% or more, still preferably 20.00% or more, and preferably 55.00% or less, more preferably 45.00% or less, still preferably 35.00% or less.

When the cumulative frequency of the particle size of the granular cheese in the range is within the above range, one can feel the smooth palatability because of the unevenness of the grain shape of the cheese while feeling the large grain feeling of the cheese. As a method for adjusting the cumulative frequency of the particle diameter of the granular cheese in this range, for example, the temperature and time of the first heating treatment (water-phase heating treatment) and the second heating treatment (final heating treatment) in the following manufacturing process of the acidic emulsified liquid seasoning, and the emulsification conditions may be adjusted.

In the present invention, the frequency of particles refers to a value indicating the percentage out of the entirety of the particles in each particle size category when measured in the particle size category 132 ch in 0.023 µm to 2000 µm. The cumulative frequency of the particle size of 0.023 µm or more and 104.7 µm or less is a value indicating the percentage out of the entirety of the particles in the particle size category of the range.

### (Method for Measuring Volume-based Particle Size Distribution)

In the present invention, the volume-based particle size distribution of cheese in the acidic emulsified liquid seasoning mentioned above is measured by the following procedure.

### (Measurement Procedure)

First, an equal amount of water was added to the acidic emulsified liquid seasoning of the present invention and mixed well, and the mixture was centrifuged in a centrifuge machine (2800 rpm × 30 seconds), and the supernatant was discarded. This was repeated for five times to prepare the sample to be measured. The prepared measurement sample is measured by a laser diffraction type particle size distribution measuring device under the following measurement conditions.

### (Measurement Conditions)

- Measurement Instrument: Laser Diffraction Type Particle Size Distribution Measurement Instrument (manufactured by NIKKISO CO., LTD., Particle Distribution Device MT3300EXII)
- Measurement Standard: Volume
- Analysis Conditions: Aspherical, Refractive index 1.6
- Particle size measurement range: 0.023 µm or more and 2000 µm or less
- Particle size classification: 132 ch

### (Hardness and Adhesion)

The acidic emulsified liquid seasoning of the present invention preferably has a hardness of 50 to 1000g, more preferably 80 to 800g, still more preferably 100 to 700g when using a texture analyzer having a cylindrical plunger (diameter: 20 mm), a load is applied by inserting a plunger for 30 mm at a descending speed of 10 mm / second into the acidic emulsified liquid seasoning at a temperature of 25 °C.

When the hardness is within the above range, the acidic emulsified liquid seasoning is easily entwined with the food material, and a sufficient amount of the acidic emulsified liquid seasoning can be adhered to the food material. Examples of the method for adjusting the hardness include adjusting the blending amount of the thickener and the blending amount of the oil and the like.

Thereafter, when the plunger is separated from the acidic emulsified liquid seasoning at a rising speed of 10 mm / second, the adhesion strength is preferably 10 to 200g, more preferably 20 to 150g, still more preferably 35 to 120g.

When the adhesion strength is within the above range, the acidic emulsified liquid seasoning is easily entwined with the food material, and a sufficient amount of the acidic emulsified liquid seasoning can be adhered to the food material. The adhesive strength can be adjusted by adjusting, for example, the amount of the thickener and the amount of the oil.

### (Method for Measuring Hardness and Adhesion Strength)

In the present invention, the hardness and the adhesion strength of the acidic emulsified liquid seasoning are measured by the procedure as follows.

### (Measurement Procedure)

The acidic emulsified liquid seasoning is filled into a container and measured under the following conditions. When a cylindrical plunger (20 mm in diameter) is inserted for 30 mm at a descending speed of 10 mm / second and a load is applied to the acidic emulsified liquid seasoning filled in the container, the point at which the maximum load is obtained is calculated and defined as the "hardness" (g).

After applying the load, when the plunger is separated from the acidic emulsified liquid seasoning at a rising speed of 10 mm / second, the point at which the negative load maximum value is obtained from the point of load 0 is calculated and defined as the "adhesion strength" (g). The adhesion strength is expressed as an absolute value.

### (Measurement Conditions)

- Measurement Instrument: Texture analyzer (Texture Analyzer TA. XT. plus, manufactured by Stable Micro Systems)
- Cylindrical Plunger (Diameter 20 mm)
   Jig: P/20 20 mm DIA CYLINDER ALMINIUM
   Plunger: AD/100 (100 mm Probe Adaptor)
- Range width: 0 to 1 kg
- Plunger descending speed: 10 mm / second
- Mode : Distance
- Approach distance to sample: 30 mm
- Rising speed of plunger after insertion into sample: 10 mm / second
- Measurement temperature: 25 °C

### (Viscosity)

The viscosity of the acidic emulsified liquid seasoning at 25 °C is 1.5 Pa·s or more, preferably 2.0 Pa·s or more, more preferably 2.5 Pa·s or more, and 15.0 Pa·s or less, preferably 14.5 Pa·s or less, more preferably 14.0 Pa·s or less. By imparting viscosity within the above range to the liquid seasoning, one can fell more of the flavor of the acidic emulsified liquid seasoning.

As for the measurement method of the viscosity, the viscosity is the value calculated by using a BH-type viscometer under the conditions of a product temperature of 25 °C and a rotation speed of 10 rpm, using Rotor No. 3 when the viscosity is 1.5 Pa·s or more and less than 10.0 Pa·s: and using Rotor No. 4 when the viscosity is 10.0 Pa·s or more and 15 Pa·s or less, based on the reading when the rotor rotated twice after the start of measurement.

### (Cheese)

The cheese to be used for the acidic emulsified liquid seasoning of the present invention may be, without particular limitation, natural cheese and/or processed cheese prepared using the natural cheese. Examples of the natural cheeses include raw material cheeses such as Parmesan, Grana, Cheddar, Emmental, Gouda, and Maribo. In the present invention, one or two or more of these raw material cheeses can be used, and it is preferable to use two or more of these raw material cheeses in order to impart palatability and richness to the acidic emulsified liquid seasoning. In particular, it is preferable to use one or more each of natural cheese and process cheese.

The blending amount of cheese (when two or more kinds of cheese are used, the total amount) is 1 mass% or more, preferably 2 mass% or more, more preferably 3 mass% or more, and 20 mass% or less, preferably 15 mass% or less, more preferably 10 mass% or less, still preferably 8 mass% or less, with respect to the total amount of the acidic emulsified liquid seasoning. When the blending amount of cheese is within the above range, one can feel the texture of the large grains of cheese easily and also the smooth palatability.

### (Edible Fats and Oils)

Examples of the edible fats and oils used in the acidic emulsified liquid seasoning of the present invention include, without particular limitation, fats and oils obtained by chemical or enzymatic treatment such as rapeseed oil, soybean oil, palm oil, cottonseed oil, corn oil, sunflower oil, safflower oil, sesame oil, olive oil, linseed oil, rice oil, camellia oil, perilla oil, grapeseed oil, peanut oil, almond oil, avocado oil, fish oil, beef fat, lard, chicken fat, or MCT (medium-chain triglyceride), diglyceride, hardened oil, transesterified oil and the like. Among these, rapeseed oil, soybean oil or palm oil is preferably used.

The amount of the edible fats and oils is 30 mass% or more, preferably 35 mass% or more, more preferably 40 mass% or more, and 70 mass% or less, preferably 65 mass% or less, more preferably 60 mass% or less with respect to the total amount of the acidic emulsified liquid seasoning. When the amount of the edible fats and oils is within the above range, one can feel the rich taste of the oil easily, and the palatability of the acidic emulsified liquid seasoning can be made smooth.

### (Yeast extract)

The yeast extract used in the acidic emulsified liquid seasoning of the present invention is an extract obtained by decomposing a yeast body as a raw material by autolysis, enzyme addition, and the like. Examples of the yeasts used as the raw material include the so-called brewer's yeasts which are surplus yeasts produced as by-products in the production of beers, baker's yeasts used in the production of breads or torula yeasts produced for edible use, sake yeasts used in the production of sake, wine yeasts used in the production of wines, and soy-sauce yeasts used in the production of soy-sauce. These yeast extracts are commercially available in the form of powder, paste or liquid, and these commercially available products can be used. In particular, the use of a paste yeast extract is preferable since the palatability of the acidic emulsified liquid seasoning can become smooth and less dispersion is seen than the powder form to make the manufacturing process simple.

The blending amount of the yeast extract is preferably 0.01% or more by mass, more preferably 0.05% or more by mass, still preferably 0.10 % or more by mass, and preferably 2.0% or less by mass, more preferably 1.5% or less, still more preferably 1.0% or less by mass with respect to the total amount of the acidic emulsified liquid seasoning. If the amount of the yeast extract is within the above range, the acidic emulsified liquid seasoning can be imparted a rich flavor, and the palatability of the acidic emulsified liquid seasoning can be made smoother.

### (Thickening Agent)

For viscosity control, a thickener is preferably blended in the acidic emulsified liquid seasoning of the present invention. Examples of the thickeners used in the acidic emulsified liquid seasoning of the present invention include xanthan gum, carrageenan, guar gum, tamarind seed gum, locust bean gum, gellan gum and gum arabic, and xanthan gum is preferred.

The amount of the thickener is preferably 1.0% or less by mass, more preferably 0.8% or less by mass, still preferably 0.5% or less by mass, still more preferably 0.3% or less by mass, and preferably 0.01% or more by mass, more preferably 0.03% or more by mass, still preferably 0.05% or more by mass with respect to the total amount of the acidic emulsified liquid seasoning. If the blending amount of the thickener is within the above range, the acidic emulsified liquid seasoning can maintain a stable emulsified state even after storage.

### (Acid Material)

The acidic emulsified liquid seasoning of the present invention can be made into an acidic liquid seasoning by blending an acid material. The pH of the acidic emulsified liquid seasoning of the present invention is, without particular limitation, preferably 3.0 or more, more preferably 3.3 or more, still preferably 3.8 or more, and preferably 6.5 or less, more preferably 5.5 or less, still more preferably 4.6 or less. When the pH is within the above range, the overall flavor of the seasoning can be enhanced by the sourness.

Examples of the acid material that can be used in the acidic emulsified liquid seasoning of the present invention include organic acids such as vinegar (acetic acid), citric acid, malic acid, lactic acid, sorbic acid, benzoic acid, adipic acid, fumaric acid, succinic acid and salts thereof, inorganic acids such as phosphoric acid and hydrochloric acid and salts thereof, lemon juice, apple juice, orange juice, lactic acid fermented milk and the like.

The blending amount of the acid material can be appropriately adjusted according to the target pH. For example, when vinegar (acidity: 4%) is used as the acid material, the blending amount of vinegar is preferably 1% or more by mass, more preferably 5% or more by mass, still preferably 10% or more by mass, and preferably 30% or less by mass, more preferably 25% or less by mass, and still preferably 20% or less by mass. If the blending amount of the vinegar is within the above range, the flavor of the entire seasoning can be enhanced by the sourness.

### (Egg yolk)

The acidic emulsified liquid seasoning of the present invention may further contain egg yolk. The egg yolk used in the acidic emulsified liquid seasoning of the present invention is not particularly limited as long as it is egg yolk generally used as an emulsifying material. Examples of the egg yolk include raw egg yolk obtained by dividing a chicken egg and separating from the egg white, and raw egg yolk subjected to one or two or more treatments such as a sterilization treatment, a freezing treatment, a drying treatment such as spray drying or freeze drying, an enzyme treatment such as by phospholipase A1, phospholipase A2, phospholipase C, phospholipase D or protease, a cholesterol removal treatment such as a supercritical carbon dioxide treatment, and a mixing treatment of salt, sugars and the like.

The blending amount of the egg yolk is preferably 0.1% or more by mass, more preferably 0.3% or more by mass, and preferably 2% or less by mass, more preferably 1% or less by mass in raw equivalent. If the blending amount of the egg yolk is within the above range, the acidic emulsified liquid seasoning can maintain a stable emulsified state even after storage.

### (Other Raw Materials)

In addition to the above-mentioned raw materials, various raw materials which are generally used for the liquid seasoning can be appropriately selected and contained in the acidic emulsified liquid seasoning of the present invention within a range the effect of the present invention is not imparted. For example, seasonings such as soy-sauce, mirin (sweet sake), table salt, sesame, glutamic acid sodium, and bouillon; saccharides such as glucose, fructose, sucrose, maltose, oligosaccharides, and trehalose; spices such as mustard powder and pepper; emulsifiers other than processed starches such as lecithin, lysolecithin, glycerin fatty acid ester, polyglycerin fatty acid ester, and sucrose fatty acid ester; antioxidants such as ascorbic acid and vitamin E; bacteriostatic agents; and the like.

### < Method for Producing Acidic Emulsified Liquid Seasoning >

One example of the method for producing the acidic emulsified liquid seasoning of the present invention will be described. For example, firstly the other aqueous phase materials such as the cheese, yeast extract, thickener, acid material, and seasoning are mixed and stirred with a mixer or the like to prepare the aqueous phase. After the aqueous phase is prepared, a first heating treatment may be performed. The first heating treatment can be carried out, for example, by raising the temperature up to 50 °C to 90 ° C, or maintaining the temperature for more than 0 minute and 10 minutes or less.

Subsequently, egg yolks are added to the prepared aqueous phase, and while stirring with a mixer or the like, edible fats and oils, i.e. the oil phase material, are poured in and emulsified to obtain a liquid seasoning in which the oil phase is emulsified and dispersed in the aqueous phase. The product may be further subjected to a second heating treatment after emulsification. The second heating treatment can be carried out, for example, by raising the temperature up to 50 °C to 80 °C, or maintaining the temperature for more than 0 minute and 10 minutes or less.

By performing the first heating treatment and/or the second heating treatment as described above, the mode diameter in the range of greater than 104.7 µm and 2000 µm or less of the cheese in the acidic emulsified liquid seasoning, the frequency thereof, and the particle size distribution can be adjusted.

In the production of the acidic emulsified liquid seasoning of the present invention, an apparatus used in the production of an ordinary emulsified food can be used. Examples of such an apparatus include a general stirrer, a stick mixer, a stand mixer, a homomixer, and a homo disper. The shape of the stirring blade of the stirrer includes a propeller blade, a turbine blade, a paddle blade, and an anchor blade.

### EXAMPLES

In the followings, the present invention will be described in more detail with reference to the Examples and Comparative Examples; however, the present invention shall not be limited to the contents of the following Examples.

### < Production Example of Acidic Emulsified Liquid Seasoning >

### [Examples 1 to 9]

An acidic emulsified liquid seasoning was prepared according to the blending ratio of Blend A shown in Table 1. Specifically, firstly, natural cheese powder, processed cheese powder, table salt, granulated sugar, and xanthan gum were prepared and subsequently mixed with separately prepared vinegar, paste yeast extract, and fresh water, and stirred at a rotation speed of 1400 rpm for 5 minutes using a homo disper to prepare an aqueous phase.

Thereafter, egg yolk which was separately prepared was added to the prepared aqueous phase, and edible fats and oils were poured in while stirring at a rotation speed of 8000 rpm for 5 minutes using a homomixer to emulsify, thereby preparing an acidic emulsified liquid seasoning.

In the manufacturing process, as described in Table 2, the first heating treatment in which the prepared aqueous phase was heated to 60 °C or 90 °C and/or the second heating treatment in which the obtained acidic emulsified liquid seasoning was heated to 60 °C or 80 °C was performed to adjust the frequency (%) of the mode diameter in the range of greater than 104.7 µm and 2000 µm or less, thereby obtaining the acidic emulsified liquid seasonings of Examples 1 to 9.

### [Examples 10 to 18]

Acidic emulsified liquid seasonings of Examples 10 to 18 were prepared by adjusting the frequency (%) of the mode diameter in the range of greater than 104.7 µm and 2000 µm or less as described in Table 3 in the same manner as Examples 1 to 9, except that a homo disper was used during emulsification and stirred at a rotation speed of 4500 rpm for 5 minutes in the manufacturing step of the acidic emulsified liquid seasoning of Blend A.

### [Examples 19 to 27]

The acidic emulsified liquid seasonings of Examples 19 to 27 were prepared by adjusting the frequency (%) of the mode diameter in the range of greater than 104.7 µm and 2000 µm or less as shown in Table 4 in the same manner as Examples 10 to 18, except that the blending proportion of Blend B shown in Table 1 was used.

The pH values of the acidic emulsified liquid seasonings of Examples 1 to 27 obtained above were all in the range of 3.8 or more and 4.6 or less.

**[Table 1]**

| Blend | A | B |
|---|---|---|
| Process Cheese | 2 | 1 |
| Natural Cheese | 5 | 3 |
| Fresh Water | 19.9 | 22.9 |
| Vinegar (Acid degree 4%) | 11 | 11 |
| Table Salt | 3 | 3 |
| Granulated suqar | 8 | 8 |
| Paste Yeast extract | 0.5 | 0.5 |
| Xanthan Gum | 0.1 | 0.1 |
| Egg Yolk | 0.5 | 0.5 |
| Edible Fats and Oils | 50 | 50 |
| Total (Mass %) | 100 | 100 |

### (Measurement of Volume-based Particle Size Distribution)

With respect to the cheese in the acidic emulsified liquid seasoning of Examples 1 to 27 obtained above, the volume-based particle size distribution was measured by the method described in details in the section of "Method for Measuring Volume-based Particle Size Distribution" above, and the mode diameter in the range of greater than 104.7 µm and 2000 µm or less, the frequency of the mode diameter, and the cumulative frequency of the particle diameter of 0.023 µm or more and 104.7 µm or less were calculated. The measurement results are shown in Tables 2 to 4.

### (Measurement of Hardness and Adhesion Strength)

The hardness and adhesion strength of the acidic emulsified liquid seasonings of Examples 1 to 27 obtained above were measured by the method described in details in the section of "Method for Measuring Hardness and Adhesion Strength" above. The measurement results are shown in Tables 2 to 4.

### (Measurement of Viscosity)

The acidic emulsified liquid seasonings of Examples 1 to 27 obtained above were calculated for viscosity by using a BH viscometer, using Rotor No. 3 when the viscosity was 1.5 Pa·s or more and less than 10.0 Pa·s, and using Rotor No. 4 when the viscosity was 10.0 Pa·s or more and 15 Pa·s or less under the conditions of a product temperature of 25 °C and a rotation speed of 10 rpm, from the readings when the rotor was rotated 2 times after the start of measurement. The measurement results are shown in Tables 2 to 4.

### (Sensory Evaluation)

The acidic emulsified liquid seasonings of Examples 1 to 27 obtained above were subjected to sensory evaluation for "presence of cheese grains" and "smooth palatability" according to the following criteria. The evaluation results are shown in Tables 2 to 4. A score of 2 or more is deemed to be a good result.

### [Evaluation Criteria for the Presence of Cheese Grains]

4: cheese grains were felt very well
3: cheese grains were felt well
2: cheese grains were felt
1: no cheese grains were felt

### [Evaluation Criteria for Smooth Palatability]

4: Grain shape of the cheese was uneven, and smooth palatability was felt very well.
3: Grain shape of the cheese was uneven, and smooth palatability was felt well.
2: Grain shape of the cheese was uneven, and smooth palatability was felt.
1: No unevenness was seen in grain shape of the cheese and no smooth palatability was felt.

**[Table 2]**

| | Ex 1 | | Ex 2 | Ex 3 | Ex 4 | Ex 5 | | Ex 6 | | Ex 7 | | Ex 8 | Ex 9 |
|---|---|---|---|---|---|---|---|---|---|---|---|---|---|
| Blend of acidic emulsified liquid seasoning | A | | A | A | A | A | | A | | A | | A | A |
| First heating treatment | None | | 90°C | None | 60°C | 90°C | | 60°C | | None | | 60°C | 90°C |
| Second heating treatment | 80°C | | None | 60°C | 80°C | 60°C | | 60°C | | None | | None | 80°C |
| Mode Diameter (µm) (range between greater than 104.7 µm and 2000 µm or less) | 191.9 | 209.3 | 542.9 | 161.4 | 148.0 | 114.1 | 124.5 | 148.0 | 161.4 | 296.0 | 322.8 | 352.0 | 542.9 |
| Frequency of mode diameter (%) | 2.39 | 2.39 | 2.48 | 2.66 | 2.69 | 2.81 | 2.81 | 2.86 | 2.86 | 2.93 | 2.93 | 3.23 | 3.55 |
| Cumulative frequency (%) (0.023µm∼104.7µm) | 48.12 | | 37.39 | 52.95 | 48.75 | 52.83 | | 47.64 | | 41.87 | | 34.42 | 30.44 |
| Hardness (g) | 276 | | 340 | 274 | 231 | 364 | | 231 | | 326 | | 275 | 338 |
| Adhesion Strength (g) | 77 | | 63 | 73 | 116 | 67 | | 90 | | 82 | | 63 | 94 |
| Viscosity (Pa·s) | 12.6 | | 5.3 | 6.9 | 13.2 | 7.0 | | 7.7 | | 5.5 | | 5.4 | 13.6 |
| Presence of Cheese Grains | 2 | | 2 | 2 | 2 | 2 | | 2 | | 2 | | 3 | 3 |
| Smooth Palatability | 3 | | 3 | 3 | 3 | 3 | | 3 | | 3 | | 3 | 3 |

**[Table 3]**

| | Ex 10 | Ex 11 | Ex 12 | Ex 13 | Ex 14 | Ex 15 | Ex 16 | Ex 17 (Comp.) | Ex 18 (Comp.) |
|---|---|---|---|---|---|---|---|---|---|
| Blend of acidic emulsified liquid seasoning | A | A | A | A | A | A | A | A | A |
| First heating treatment | None | None | None | 60°C | 90°C | 60°C | 90°C | 60°C | 90°C |
| Second heating treatment | 60°C | None | 80°C | 60°C | None | None | 80°C | 80°C | 60°C |
| Mode Diameter (µm) (range between greater than 104.7 µm and 2000 µm or less) | 592.0 | 913.0 | 913.0 | 913.0 | 913.0 | 592.0 | 913.0 | 913.0 | 913.0 |
| Frequency of mode diameter (%) | 2.98 | 3.42 | 3.39 | 3.53 | 3.90 | 4.04 | 4.15 | 4.36 | 4.41 |
| Cumulative frequency (%) (0.023µm∼104.7µm) | 42.43 | 31.10 | 34.00 | 28.03 | 26.03 | 23.00 | 37.36 | 16.63 | 23.14 |
| Hardness (g) | 307 | 292 | 320 | 387 | 673 | 415 | 555 | 442 | 545 |
| Adhesion Strength (g) | 59 | 70 | 70 | 57 | 54 | 52 | 66 | 64 | 53 |
| Viscosity (Pa·s) | 6.5 | 5.0 | 12.8 | 7.0 | 5.9 | 5.2 | 14.0 | 13.0 | 7.6 |
| Presence of Cheese Grains | 2 | 3 | 3 | 3 | 4 | 4 | 4 | 4 | 4 |
| Smooth Palatability | 4 | 4 | 4 | 4 | 4 | 2 | 2 | 1 | 1 |

**[Table 4]**

| | Ex 19 | Ex 20 | Ex 21 | Ex 22 | Ex 23 | Ex 24 | Ex 25 | Ex 26 | Ex 27 (Comp.) |
|---|---|---|---|---|---|---|---|---|---|
| Blend of acidic emulsified liquid seasoning | B | B | B | B | B | B | B | B | B |
| First heating treatment | None | 60°C | None | 60°C | None | 90°C | 90°C | 90°C | 60°C |
| Second heating treatment | None | 80°C | 60°C | 60°C | 80°C | None | 60°C | 80°C | None |
| Mode Diameter (µm) (range between greater than 104.7 µm and 2000 µm or less) | 296.0 | 913.0 | 352.0 | 913.0 | 352.0 | 542.9 | 837.2 | 913.0 | 383.9 |
| Frequency of mode diameter (%) | 3.07 | 3.55 | 3.63 | 3.70 | 3.87 | 3.89 | 4.15 | 4.28 | 4.60 |
| Cumulative frequency (%) (0.023µm∼104.7µm) | 43.54 | 22.28 | 26.53 | 26.85 | 22.04 | 26.10 | 23.15 | 19.07 | 21.10 |
| Hardness (g) | 254 | 336 | 177 | 248 | 269 | 340 | 432 | 443 | 219 |
| Adhesion Strength (g) | 41 | 58 | 54 | 48 | 61 | 53 | 39 | 56 | 54 |
| Viscosity (Pa·s) | 4.0 | 11.6 | 5.2 | 5.7 | 9.5 | 4.9 | 5.9 | 11.4 | 4.5 |
| Presence of Cheese Grains | 2 | 3 | 3 | 3 | 3 | 4 | 3 | 3 | 3 |
| Smooth Palatability | 3 | 3 | 3 | 3 | 3 | 3 | 2 | 2 | 1 |

According to Examples 1 to 27, by adjusting the temperature of the first heating treatment (aqueous phase heating treatment) and the second heating treatment (final heating treatment), and by adjusting the emulsification conditions in the manufacturing process of the acidic emulsified liquid seasoning, it was possible to adjust the mode diameter in the range of greater than 104.7 µm and 2000 µm or less in the volume-based particle size distribution of cheese in the acidic emulsified liquid seasoning and the frequency thereof, as well as the cumulative frequency in the specific range of particle sizes. Due to this, suitable mode diameter and frequency as above of the cheese for the large grain feeling and smooth palatability of the cheese were found, as well as the suitable cumulative frequency in the specific range of particle diameter, and it was possible to prepare a cheese-containing acidic emulsified liquid seasoning capable of achieving both the large grain feeling and smooth palatability of the cheese.

## Claims

1. An acidic emulsified liquid seasoning comprising cheese, and edible fats and oils, wherein
the content of the cheese is 1% or more by mass and 20 % or less by mass with respect to the total amount of the acidic emulsified liquid seasoning;
the content of the edible fats and oils is 30% or more by mass and 70% or less by mass with respect to the total amount of the acidic emulsified liquid seasoning;
the viscosity of the acidic emulsified liquid seasoning at 25 °C is 1.5 Pa • s or more and 15.0 Pa • s or less;
and wherein a frequency of mode diameter in the range of greater than 104.7 µm and 2000 µm or less of the cheese in the acidic emulsified liquid seasoning is 1.00% or more and 4.30% or less in a volume-based particle size distribution measured using a laser diffraction type particle size distribution analyzer under the analysis conditions of: non-spherical and refractive index of 1.6; particle size measurement range of 0.023 µm or more and 2000 µm or less; and particle size classification of 132 ch.

2. The acidic emulsified liquid seasoning according to claim 1, wherein
in the volume-based particle size distribution, the cumulative frequency of a particle diameter of 0.023 µm or more and 104.7 µm or less is 10.00% or more and 55.00% or less.

3. The acidic emulsified liquid seasoning according to claim 1 or 2, wherein
in the volume-based particle size distribution, the mode diameter is 114.1 µm or more and 1535 µm or less and
the frequency of the mode diameter is 2.00% or more and 4.00% or less.

4. The acidic emulsified liquid seasoning according to any one of claims 1 to 3, wherein
the acidic emulsified liquid seasoning has a hardness of 50g or more and 1000g or less, when using a texture analyzer having a cylindrical plunger (diameter: 20 mm), a load is applied by inserting the plunger for 30 mm at a descending speed of 10 mm / second into the acidic emulsified liquid seasoning at a temperature of 25 °C, and
subsequently, when the plunger is separated from the acidic emulsified liquid seasoning at a rising speed of 10 mm / second, the adhesion strength is 10g or more to 200g or less.

5. The acidic emulsified liquid seasoning according to any one of claims 1 to 4, wherein
the cheese comprises two or more kinds of raw material cheeses.

6. The acidic emulsified liquid seasoning according to claim 5, wherein
the raw material cheeses are at least one or more of natural cheese and process cheese respectively.

7. The acidic emulsified liquid seasoning according to any one of claims 1 to 6 further comprising a yeast extract in a paste form.
